(19) **Europäisches Patentamt**
European Patent Office
Office européen des brevets

(11) **EP 1 422 187 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
***B66C 23/84*** *(2006.01)*

(21) Anmeldenummer: 03021298.9

(22) Anmeldetag: **19.09.2003**

(54) **Schwenkantrieb**

Swivel drive

Dispositif d'entraînement de pivotement

(84) Benannte Vertragsstaaten:
**DE ES FR GB IT SK**

(30) Priorität: **20.09.2002 DE 20214615 U**

(43) Veröffentlichungstag der Anmeldung:
**26.05.2004 Patentblatt 2004/22**

(73) Patentinhaber: **IMO Antriebseinheit GmbH**
**91350 Gremsdorf (DE)**

(72) Erfinder: **Hubertus Frank**
**91315 Höchstadt (DE)**

(74) Vertreter: **Küchler, Stefan**
**Patentanwalt**
**Postfach 11 93 40**
**90103 Nürnberg (DE)**

(56) Entgegenhaltungen:
| | |
|---|---|
| DE-A- 2 053 523 | DE-A- 3 442 138 |
| DE-A- 19 628 520 | DE-C- 715 221 |
| DE-C- 800 033 | US-A- 4 100 973 |
| US-A- 5 834 662 | |

**Beschreibung**

Die Erfindung richtet sich auf eine Vorrichtung in Form eines sog. Schwenktriebs zur verdrehbaren Kopplung eines ersten Maschinen- oder Anlagenteiles, beispielsweise eines Kranes, mit einem zweiten Maschinen- oder Anlagenteil, Chassis oder Fundament, umfassend ein Lagerungsteil mit einem ersten Anschlußelement zur Festlegung der Vorrichtung an einem Maschinen- oder Anlagenteil, Chassis oder Fundament, ein(en) an dem Lagerungsteil verdrehbar gelagertes (-en) Schneckenrad oder -ring mit einem zweiten Anschlußelement zur Festlegung an einem anderen Maschinen- oder Anlagenteil sowie einem entlang seinem Außenumfang umlaufend angeordneten Zahnkranz, sowie eine mit dem Zahnkranz kämmende Schnecke, die in dem Lagerungsteil oder einem damit integrierten oder verbundenen Teil aufgenommen und/oder gelagert und von einem Antriebsmotor in Drehung versetzbar ist.

Schwenktriebe bestehen i.a. aus einem Schneckengetriebe, das sich durch hohe Drehzahl-Untersetzungsverhältnisse und damit hohe Kraft-Übersetzungsverhältnisse auszeichnet, in Verbindung mit einem Wälzlager, das hohe kombinierte Belastungen aufnehmen kann. Eingesetzt werden solche Schwenktriebe in Container- und/oder Bordkränen, in Hubarbeitsbühnen, im Untertagebau, etc. Schneckenrad oder -ring haben dabei eine in sich geschlossen Außenseite, in deren Bereich ein endloser Kranz von Zähnen vorgesehen ist, so dass der Drehwinkel eines solchen Getriebes nicht begrenzt ist.

Je nach Auslegung hat ein Schneckengetriebe selbsthemmende oder nichtselbsthemmende Eigenschaften im Fall eines Antriebs von dem Schneckenrad her. In vielen Fällen ist eine Selbsthemmung wünschenswert, bspw. bei der Gefahr einer durchziehenden Last wie bei Kränen.

Selbsthemmend ausgelegte Schneckengetriebe haben allerdings konstruktionsbedingt einen sehr kleinen Wirkungsgrad η von weniger als 50 % und sind daher energetisch sehr ungünstig; außerdem neigen Sie bei Einsatz unter Schräglage, d.h. bei nicht vertikal ausgerichteter Drehachse, aufgrund des sog. Stick-Slip-Effektes zur Entwicklung von Geräuschen und Vibrationen.

Dokument DE-A-34 42 138 offenbart eine Vorrichtung in Form eines Schwenktriebs gemäß dem Oberbegriff von Anspruch 1.

Man hat daher bereits versucht, anstelle eines selbsthemmenden Schneckengetriebes einen Antriebsmotor mit integrierter, zuschaltbarer Stillstandsbremse zu verwenden. Dabei ist jedoch eine aufwendige Mechanik erforderlich, um das Ein- und Ausrücken der Bremse zu ermöglichen. Außerdem wird eine Hilfsenergie und Ansteuerelektrik (Sicherungen, Verriegelung, etc.) benötigt, um ein gleichzeitiges Einschalten des Motors und Lösen der Bremse zu bewirken. Alle beweglichen, insbesondere geschalteten und/oder elektrisch betriebenen Elemente bringen jedoch eine nicht unbeträchtliche Ausfallgefahr mit sich, worunter die Zuverlässigkeit solchermaßen aufgebauter Anlagen leidet.

Aus diesen Nachteilen des beschriebenen Stands der Technik resultiert das die Erfindung initiierende Problem, einen gattungsgemäßen Schwenktrieb derart weiterzubilden, dass ein Selbsthemmungseffekt insbesondere gegenüber durchziehenden Lasten od. dgl. erreicht wird, und wobei eine evtl. erforderliche Zusatzeinrichtung möglichst zuverlässig sein soll. Darüber hinaus soll sie nach Möglichkeit konstruktiv einfach aufgebaut und damit preiswert herstellbar und/oder ohne Hilfsenergie betreibbar sein.

Die Lösung dieses Problems gelingt bei einer gattungsgemäßen Vorrichtung durch wenigstens eine Bremseinrichtung, die einerseits an der Schnecke angreifend angeschlossen oder anschließbar und andererseits an dem Lagerungsteil oder einem damit verbundenen oder verbindbaren Teil abgestützt ist, und die permanent und drehrichtungsunabhängig eine Bremswirkung erzeugt.

Eine solche, von einem Antriebsmotor vorzugsweise völlig unabhängige Bremseinrichtung ist als permanent wirkende Bremse realisiert. Weil sie aus diesem Grund keine schaltenden Elemente aufweist, kann die Ausfallwahrscheinlichkeit in kleinsten Grenzen gehalten werden. Da gattungsgemäße Schwenktriebe üblicherweise mit äußerst geringen Drehzahlen betrieben werden, ist auch ein ggf. vorhandener Verschleiß minimal. Darüber hinaus können Verschleißteile in regelmäßigen Wartungsintervallen ausgetauscht werden, so dass sich insgesamt eine optimale Zuverlässigkeit ergibt, insbesondere im Hinblick auf das völlige Fehlen einer ebenfalls potentiell störungsanfälligen Ansteuerelektrik oder -elektronik. Aufgrund des hohen Kraftübersetzungsverhältnisses bei Schneckengetrieben im Allgemeinen und bei Schwenkantrieben im Besonderen führt bereits eine geringe Bremskraft an der Schnecke zu einer hohen Hemmungswirkung auf der Abtriebsseite des Schwenkantriebs. Die geringe Hemmungswirkung belastet einen Antriebsmotor nur geringfügig. Da das Schneckengetriebe somit als nicht selbsthemmendes Getriebe ausgeführt sein kann, treten selbst bei einem Betrieb unter Schräglage keine unangenehmen Geräusch- oder Vibrationsentwicklungen auf.

Es liegt im Rahmen der Erfindung, dass die Bremseinrichtung eine von der Schneckenwelle funktionell getrennte Bremse ist. Dadurch wird ein Verschleiß der Schneckenwelle, wie er bspw. durch direkt auf die Schneckenwelle einwirkende Reibelemente verursacht werden könnte, vermieden. Bei einem Verschleiß der Bremseinrichtung kann diese abgebaut und ersetzt werden, während die Schnecke weiterverwendet wird.

Die erfindungsgemäße Bremseinrichtung sollte permanent und drehrichtungsunabhängig ein Bemsmoment $D_{brems}$ erzeugen. Nur dadurch kann sichergestellt werden, dass das Getriebe bei jedem Belastungsfall und in jeder Drehstellung selbsthemmend ist.

Ferner hat es sich bewährt, dass das Bremsmoment von der Bremseinrichtung permanent und drehrichtungsunabhängig auf die Schneckenwelle eingeleitet wird. Eine feste Ankopplung ohne Schaltkupplungen, Freiläufen od. dgl. sorgt dafür, dass ein erfindungsgemäßer Schwenktrieb völlig identische Momentübertragungseigenschaften aufweist wie ein selbsthemmendes Getriebe.

Die Kopplung zwischen Bremseinrichtung und Schneckenwelle läßt sich derart ausbilden, dass das Bremsmoment frei von (substantiellen) Radialkräften auf die Schneckenwelle einwirkt. Durch diese Maßnahme wird das Auftreten von prinzipbedingten Radialkräften ausgeschlossen, und somit werden die Drehlager entlastet, und die Biegespannungen der Schneckenwelle werden reduziert.

Vorzugsweise wird das Bremsmoment von der Bremseinrichtung durch einen in tangentialer Richtung wirkenden Formschluß auf die Schneckenwelle übertragen. Hierbei handelt es sich um eine feste Ankopplung ohne (resultierende) Radialkraftkomponente, die überdies lösbar und mit geringem Aufwand zusammenfügbar ist.

Dabei kann die Bremseinrichtung über ineinandergreifende, prismatische Querschnitte oder durch eine Nut-Feder-Verbindung mit der Schneckenwelle gekoppelt sein. Während im ersten Fall bspw. an zueinander komplementäre Sechskant-Querschnitte zu denken ist, sind Nut-Feder-Verbindungen bspw. von Motorabtriebswellen her bekannt.

Eine vorteilhafte Weiterbildung der Erfindung besteht darin, dass die Bremseinrichtung nicht zwischen, sondern axial außerhalb der Drehlager der Schneckenwelle angeordnet ist. Dieses Merkmal gewährt bei Bedarf einen leichten Zugang zu der Bremseinrichtung, während andererseits durch einen minimalen Abstand der Drehlagerungen eine optimale Führung der Schnecke sichergestellt ist.

Es hat sich als günstig erwiesen, dass die Bremseinrichtung im Bereich einer Stirnseite der Schnecke angeordnet ist, die nicht mit einem Antriebsmotor gekoppelt oder koppelbar ist. Dadurch ist die Wartung erheblich erleichtert, da solchenfalls ein Zugang zu der erfindungsgemäßen Bremse ohne Demontage eines Antriebsmotors möglich ist.

Indem die Bremseinrichtung an- und abbaubar ist, wird die Möglichkeit eröffnet, den Schwenktrieb je nach Anwendungsfall mit oder ohne Bremse verwenden zu können, bspw. dann, wenn keine durchziehende Last vorhanden ist. Sofern die Bremseinrichtung ohne Demontage eines Antriebsmotors abgenommen werden kann, so ist überdies ein rascher Ersatz möglich.

Weitere Vorteile ergeben sich daraus, dass die Bremseinrichtung an einem Anschluß für eine Sicherheitskurbel od. dgl. anbaubar ist. Ein solcher Anschluß ist bei hochwertigen Schwenktrieben häufig zu finden; er soll gewährleisten, dass bei Ausfall des Antriebsmotors der Schwenktrieb in eine gewünschte Position verfahren werden kann. Ein solcher Anschluß wird daher nur höchst selten benötigt und kann aus diesem Grund im Normalbetrieb zum Anschluß der erfindungsgemäßen Bremseinrichtung verwendet werden. Bei einer Störung kann die Bremseinrichtung bspw. mit einem Schraubendreher in einem kürzesten Zeitraum abgebaut werden, um den darunter befindlichen Kurbelanschluß, zumeist einen Steckanschluß in Form eines Vier- oder Sechskants, freizulegen.

Die Erfindung sieht weiterhin vor, dass die Bremseinrichtung eine passiv wirkende Bremse ist, d.h. ohne Zufuhr einer Hilfsenergie betrieben wird. Da infolge des permanenten Eingriffs keine Verstellung der Bremskraft erfolgt, kann die Bremse eine zeitlich etwa konstante Bremskraft erzeugend ausgebildet sein. Natürlich ist im Normalfall die Haftreibung einer Bremse im Stillstand größer als die Gleitreibung während des Laufs, dies ist jedoch ein zusätzlicher Vorteil der erfindungsgemäßen Anordnung, weil dadurch die von einem Motor ggf. aufzubringende Betätigungskraft nach dem Losbrechmoment reduziert wird. Andererseits können sich die Bremseigenschaften in Abhängigkeit von Temperatur, Luftfeuchtigkeit und/oder ggf. Alter/Verschleiß ebenfalls ändern, allerdings nur in vergleichsweise engen Grenzen.

Bevorzugt ist die Bremse eine Reibungsbremse mit aneinander reibenden Flächen. Reibungseffekte können vorteilhaft genutzt werden, um die überschüssige Energie bei einer durchziehenden Last in Wärme umzusetzen. Bei stehendem Schwenktrieb kann die erhöhte Haftreibungskraft zuverlässig ein äußeres, an dem Schneckenrad angreifendes Drehmoment kompensieren.

Diese Ausführungsform erfährt eine weitere Optimierung dadurch, dass die Reibflächen von der Achse der Schnecke etwa lotrecht durchsetzt angeordnet sind. Solche Flächen lassen sich an vergleichsweise dünnen Plättchen anordnen, die in völlig identischer Form sodann in einer größeren Anzahl aneinandergeschichtet werden können, um die Reibungswirkung eines aneinanderliegenden Flächenpaars entsprechend zu vervielfältigen. Dadurch kann die Baugröße einer derartigen Bremse minimiert werden.

Weitere Vorteile bieten ein oder mehrere, insbesondere vorgespannte Federelemente zum Aneinanderpressen der Reibflächen der Bremse. Mittels derartiger Federelemente kann die Anpreßkraft zwischen den Reibflächen und damit auch die dazu etwa proportionale Reibungskraft weitgehend unabhängig gegenüber schwankenden Umgebungsbedingungen, insbesondere Temperaturschwankungen, eingehalten werden, da sich bspw. bei - thermisch bedingten - Längenänderungen $\Delta\ell$ der Bremse die Federkraft nur um $\Delta F = c * \Delta\ell << c * \ell = F$ ändert (c = Federkonstante). Damit wird bspw. vermieden, dass sich die Bremse im Laufe des Schwenkbetriebs erwärmt und sodann entweder klemmen oder durchrutschen könnte.

Das (die) Federelement(e) kann (können) als zur Schneckenachse konzentrische Federn, insbesondere Tellerfeder(n), ausgebildet sein. Solche Federn sind in der Lage, eine axiale Federkraft zu erzeugen, die lotrecht zu den Reibflächen gerichtet ist und daher direkt auf diese eingeleitet werden kann, bspw. durch axiales Aneinandersetzen derartiger Federelemente mit einem oder mehreren, beweglichen Reibflächenkörpern. Besonders einfach wird die Anordnung dabei, wenn die Federelemente als Druckfedern ausgebildet sind.

Wenn das Bremsmoment der Bremseinrichtung ein- oder nachstellbar ist, so kann das von ihr hervorgerufene Bremsmoment gemäß der obigen Formel völlig individuell dem betreffenden Anwendungsfall angepaßt werden. Wenn die Bremskraft auf einen bei Beachtung aller Sicherheitsrisiken ausreichenden Wert eingestellt wird, bspw. 10 - 20 % oberhalb des obigen Gleichgewichtswerts, so ist andererseits ein minimaler Energieverbrauch während des motorischen Antriebs gewährleistet.

Sofern die Vorspannung des (der) Federelements (-e) einstellbar ist, kann die auf die Reibungsflächen einwirkende, weitgehend konstante Normalkraft in weiten Grenzen variabel vorgegeben werden. Damit ist eine stufenlose Regulierung des Hemmungsgrades möglich. Die Charakteristik des Schwenktriebs kann also kontinuierlich von "nicht selbsthemmend" über "im Stillstand selbsthemmend bis $D_{max}$, dem Drehmoment bei maximaler Belastung der Vorrichtung" und "selbsthemmend bis $D_{max}$ im Lauf, d.h. bremsend aus der Drehung heraus" für beliebige $D_{max}$ bis hin zu "absolut selbsthemmend auch bei $D_{max} = \infty$" eingestellt werden, bei gleichzeitig minimalen Reibungsverlusten.

Zur Einstellung der Federvorspannung läßt sich ein zu der Achse der Schnecke konzentrisches oder paralleles Schraubmittel vorsehen. Diesem obliegt es, bspw. unter Verspannung gegenüber einem Lagerungs- oder Gehäuseteil des Schwenktriebs oder einem damit verbundenen oder verbindbaren Teil, die Ausdehnung des Federmittels in dessen Wirkrichtung, vorzugsweise in Richtung der Schneckenachse, unter teilweisem Zusammenpressen auf einen Wert $\ell$ vorzugeben bzw. einzuengen, woraus sodann gemäß $F = c * \ell$ die Federkraft und daraus die auf die Reibungselemente einwirkende Normalkraft resultiert.

Eine vorteilhafte Konstruktionsvorschrift sieht vor, das von der Bremseinrichtung erzeugte Bremsmoment $D_{brems}$ (etwa) für das Drehmoment $D_{max}$ bei maximaler Belastung der Vorrichtung auszulegen, vermindert um das hemmende Reibungsmoment $D_{reib}$ des Schneckengetriebes sowie schließlich dividiert durch das Kraft- bzw. Drehmomentübersetzungsverhältnis ü von Schnecke zu Schneckenrad oder -ring:

$$|D_{brems}| \geq [|D_{max}| - |D_{reib}|] / ü$$

Bei einer derartigen Bemessung ergibt sich an dem Schneckenrad folgende Drehmomentsituation:

$$|D_{max}| \leq |D_{reib}| + [ü * |D_{brems}|].$$

Dies bedeutet, dass selbst das maximale, zu erwartende Lastmoment nicht in der Lage ist, die hemmende Wirkung des Schneckengetriebes plus Bremse zu überwinden. Der Schwenktrieb kann nicht anlaufen. Dies ist nicht gleichbedeutend mit einem völlig selbsthemmenden Getriebe, das bei keiner - auch noch so großen Last - anläuft; vielmehr kann durch eine geeignete Dimensionierung der Bremse zwar das maximal zu erwartende Lastmoment abgefangen werden, ohne jedoch den Wirkungsgrad des Schneckengetriebes auf den niedrigeren Wert bei selbsthemmenden Schneckengetrieben reduzieren zu müssen. Je nach Anwendungsfall ist es darüber hinaus möglich, im Rahmen der obigen Gleichung wahlweise das Haftreibungsmoment oder das Gleitreibungsmoment einzusetzen. Im ersteren Fall wird bei Stillstand ein selbsttätiges Anlaufen vermieden, im letzteren Fall kann sogar ein Abbremsen bei drehendem Schwenktrieb erfolgen.

Die Erfindung erlaubt eine Weiterbildung dahingehend, dass das Schneckengetriebe nicht selbsthemmend ist. Die Selbsthemmungsfunktion wird statt dessen von der erfindungsgemäßen Bremse übernommen. Dadurch ist der Anwender bspw. in die Lage versetzt, auch nach Erwerb eines erfindungsgemäßen Schwenktriebs noch dessen Eigenschaften - selbstehmmend oder nicht - beeinflussen zu können, indem bei Bedarf die erfindungsgemäße Bremse demontiert oder außer Kraft gesetzt und nur das nicht selbsthemmende Schneckengetriebe allein verwendet wird.

Zum Schutz vor Verunreinigungen sollten die Elemente der Bremse, insbesondere Reibflächen und ggf. Federelemente, von einem vorzugsweise glockenförmigen Gehäuse umgeben sein. Diesem kann außerdem die Aufgabe übertragen werden, erforderliche Gegenkräfte und/oder -momente in ein statisches Teil des Schwenktriebs, insbesondere in dessen Lagerungsteil, abzuleiten. Hierbei ist an das Bremsmoment $D_{brems}$ einerseits zu denken, an die Normal- oder Federkraft F andererseits. Wenn die erfindungsgemäße Bremse zwischen Schnecke und Antriebsmotor eingebaut ist, kann die schützende Funktion eines Gehäuses dem die Schnecke umgebenden Teil einerseits und einer Stirnseite bzw. einem stirnseitigen Schild des Antriebsmotors andererseits übertragen sein, ggf. unter Einfügen einer bspw. hohlzylindrischen bzw. ringförmigen Abstandshülse.

Zwecks Ableitung von Kräften und/oder Drehmomenten kann das Gehäuse an dem die Schnecke umgebenden Lagerungsteil abgestützt und/oder fixiert sein. Eine axiale Abstützung bzw. Fixierung kann wahlweise auch an der betreffenden Stirnseite der Schnecke, insbesondere an einem dort angeordneten Steckanschluß für eine Handkurbel od. dgl., erfolgen. Solchenfalls würde für eine Dreharretierung bspw. eine formschlüssiges Abstützen des Gehäuses gegenüber dem Lagerungsteil ausreichend sein. Konstruktiv einfacher ist jedoch die direkte Fixierung des Gehäuses an dem Lagerungsteil selbst oder einem damit verbundenen Element, bspw. mittels zu der Schneckenachse paralleler, exzentrischer Schrauben.

Schließlich entspricht es der Lehre der Erfindung, dass das Gehäuse zumindest im Bereich der Federelemente mit Schmierfett od. dgl. befüllbar, insbesondere mit einem Schmiernippel versehen ist. Durch eine solche Maßnahme kann die Gleitreibung bis herab zu niedrigsten Drehzahlen definiert bzw. konstant vorgegeben werden, so dass eine derartige Bremse keinerlei Vibrationen auslöst, wie sie andererseits durch abwechselndes Festklemmen und Losbrechen verursacht werden könnten.

Weitere Merkmale, Einzelheiten, Vorteile und Wirkungen auf der Basis der Erfindung ergeben sich anhand der folgenden Beschreibung bevorzugter Ausführungsbeispiele der Erfindung sowie anhand der Zeichnung. Hierbei zeigt:

Fig. 1    einen erfindungsgemäßen Schwenktrieb in einer Draufsicht auf seine Grundebene, teilweise abgebrochen, sowie teilweise in einem Schnitt entlang der mittleren Grundebene des Schneckenrings;

Fig.2    den Bereich der Schnecke einer anderen Ausführungsform eines Schwenktriebs in der Fig. 1 entsprechenden Schnittdarstellung;

Fig. 3    eine Draufsicht auf die Stirnseite der Bremse aus Fig. 2;

Fig.4    eine wiederum abgewandelte Ausführungsform einer erfindungsgemäßen Bremse in einer der Fig. 2 entsprechenden, vergrößerten Darstellung; sowie

Fig. 5    eine abermals modifizierte Ausführungsform einer erfindungsgemäßen Bremse in einer der Fig. 1 entsprechenden Darstellung.

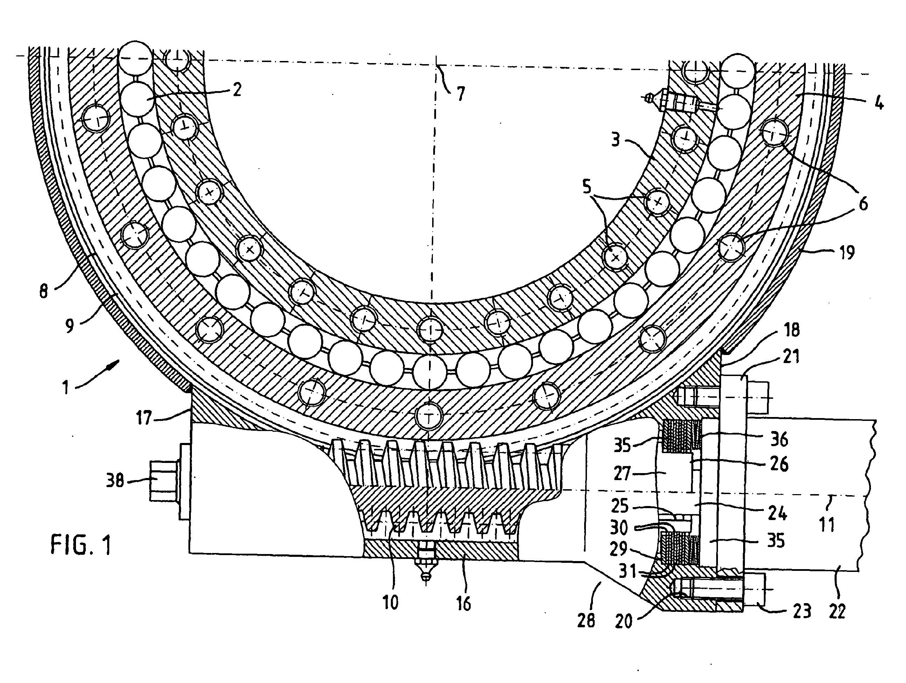

Der erfindungsgemäße Schwenktrieb 1 aus Fig. 1 hat entsprechend der Gestalt des Schneckenrads eines Schneckengetriebes eine ebene, etwa kreisförmige Grundfläche. Durch ein Wälzlager 2 sind zwei ringförmige Anschlußelemente 3,4 mit zu der Grundebene des Schwenktriebs 1 rechtwinklig verlaufenden, kranzförmig angeordneten Befestigungsbohrungen 5,6, konzentrisch zu einer gemeinsamen, die Grundebene rechtwinklig durchsetzenden Drehachse 7 geführt.

Bedingt durch das gemeinsame Wälzlager 2 liegen die beiden ringförmigen Anschlußelemente 3,4 etwa auf derselben Höhe, bezogen auf die Drehachse 7. Die beiden Anschlußelemente 3,4 haben unterschiedliche Durchmesser; ein Anschlußelement 3 liegt - bezogen auf die gemeinsame Drehachse 7 - radial innerhalb des anderen Anschlußelements 4. Durch Verwendung einer zweireihigen Wälzlagerung 2 insbesondere in Form von Schrägkugellagerungen ist die konzentrische Ausrichtung der beiden Anschlußringe 3,4 auch unter Einwirkung radialer und/oder axialer Kräfte sowie von Kippmomenten gewährleistet.

Im Bereich der Außenseite 8 des äußeren Anschlußelements 4 ist eine rundumlaufende Verzahnung 9 angeordnet. Mit dieser kämmt eine Schnecke 10, deren Drehachse 11 in oder parallel zu der Grundebene des Schwenktriebs 1 liegt und nach Art einer Tangente nahe an dem Außenumfang 9 des äußeren, ringförmigen Anschlußelements 4 vorbeiläuft. Die Schnecke 10 erfährt eine Führung in Form von im Bereich ihrer beiden Enden 12,13 angeordneten Drehlagerungen, bspw. Wälzlagerungen. Die Schnecke 10 ist in ihrer axialen Richtung unverschieblich gelagert.

Diese Drehlagerungen stützen sich mit ihrem Außenumfang innerhalb eines die Schnecke 10 mit Ausnahme ihres dem verzahnten Anschlußelement 4 zugewandten Bereichs mantelförmig umgebenden Teils 16 ab. Dieses mantelförmige Teil 16 wiederum ist mit dem innenliegenden, ringförmigen Anschlußelement 3 verbunden, entweder integral hergestellt, insbesondere gegossen, oder an diesem fixiert, bspw. mittels einer Schweißnaht oder mit Schrauben. Diese Verbindung erfolgt über einen das verzahnte Anschlußelement 4 an einer von dessen Stirnseiten übergreifenden Bereich, der vorzugsweise scheibenringförmig die gesamte Drehachse 7 umlaufend angeordnet ist. An diesem Bereich ist weiterhin ein an die beiden stirnseitigen Bereiche 17,18 des die Schnecke 10 aufnehmenden Teils 16 anschließender, die Verzahnung 9 des äußeren Anschlußelements 4 umgebender, etwa C-förmig offener Mantel 19 angeformt oder angesetzt, insbesondere angeschweißt. Durch diesen ist der Verzahnungsbereich 9 weitgehend umkapselt und vor eindringenden Partikeln geschützt.

An Gewindebohrungen 20 an einer Stirnseite 18 des die Schnecke 10 aufnehmenden und abstützenden Teils 16 ist konzentrisch zu der Schneckenlängsachse 11 ein mit einem stirnseitigen Flansch 21 versehener Antriebsmotor 22, bspw. ein Hydraulik- oder Elektromotor - angeschraubt 23. Dessen Abtriebswelle 24 greift in eine Ausnehmung 25 in der Stirnseite 26 der Schnekkenwelle 27 ein und ist mit dieser über eine in Nuten eingelegte Feder drehfest gekoppelt.

Die Geometrie und Verzahnung des Schnekkengetriebes 9,10 ist derart ausgeführt, dass dieses nicht selbsthemmend ist und daher in allen erdenklichen Schräglagen ohne Vibrationen und Geräuschentwicklung läuft. Um dem Getriebe darüber hinaus (begrenzt) selbsthemmende Eigenschaften zu verleihen, so dass es bei einer durchziehenden Last nicht anläuft, ist eine auf die Schnecke 10 einwirkende Bremse 28 vorgesehen.

Bei der Ausführungsform nach Fig. 1 ist an der Schnecke 10 zwischen dem Antriebsmotor 22 und dem betreffenden Schneckenwellenende 13 eine Bremseinrichtung 28 eingefügt. Zu diesem Zweck ist das Schneckenwellenende jenseits, d.h. außerhalb des betreffenden Lagers als Außensechskant ausgebildet. Gleichzeitig ist in diesem Bereich die Ausnehmung bzw. Bohrung 29 radial erweitert, um Platz für ein Paket von lamellenförmig aufeinandergeschichteten Bremsscheiben 30,31 zu schaffen.

Hierbei existieren zwei Sorten von Bremsscheiben 30,31. Beide haben eine im Prinzip ringförmige Gestalt, und auch Dicke und Material können identisch sein.

Jedoch hat eine Sorte 30 eine zentrale Ausnehmung in Form eines formschlüssig über den Außensechskant stülpbaren Sechsecks 32 und einen kreisförmigen Außenumfang mit einem Durchmesser, welcher kleiner ist als der lichte Durchmesser der Bohrung 29 in dem die Schnecke 10 aufnehmenden Teil 16. Diese Scheiben 30 rotieren daher stets mit der Drehzahl der Schnecke 10.

Die andere Scheibensorte 31 hat eine bspw. kreisförmige Ausnehmung, deren Radius größer ist als der maximale Radius des Wellenendes 13. Andererseits verfügen diese Scheiben 31 an ihrem Außenumfang über ein oder mehrere, bspw. vier gleichmäßig über den Umfang verteilt angeordnete, radiale Erweiterungen 33, die in entsprechende Vertiefungen 34 in der Mantelseite der Bohrung 29 eingreifen, so dass diese Scheiben 31 durch Formschluß stets unverdrehbar gegenüber dem die Welle 10 aufnehmenden Teil 16 in der Bohrung 29 gehalten sind.

Wie Fig. 1 weiter erkennen läßt, sind die Bremsscheiben 30,31 abwechselnd hintereinander geschichtet, bspw. jeweils drei bis vier Scheiben jeder Sorte 30,31 insgesamt. Dieses Bremsscheibenpaket 30,31 kann von einem Paar stirnseitig angeordneter Ringe 35 eingefaßt sein. Daran schließen sich - vorzugsweise jenseits der Welle 10 bzw. an der dem Motor 22 zugewandten Stirnseite ein oder mehrere ringförmige Tellerfedern 36 an, die sich schließlich auf dem Flansch 21 des Motors 22 oder einer dazwischengelegten Ringscheibe 37 abstützen. Durch Festschrauben 23 des Antriebsmotors 22 werden gleichzeitig die Tellerfedern 35 begrenzt zusammengedrückt und dadurch vorgespannt und geben diese Federkraft als Normalkraft an die Bremsscheiben 30,31 weiter, welche solchermaßen aneinander reiben und damit die Schneckenwelle 27 abbremsen. Die Gegenkraft erfährt das Bremsscheibenpaket 30,31 dabei an einer von der Aussparung an dem Wellenende 13 (Bereich mit sechseckigem Querschnitt) und/oder der radial erweiterten Bohrung 29 geschaffenen Abstufung. Durch die axial wirkende Normalkraft hat die Bremseinrichtung 28 eine ungerichtete Wirkungsweise, d.h., das erzeugte Reibungsmoment ist unabhängig von der Drehrichtung.

An dem gegenüberliegenden Ende 12 der Schneckenwelle 27 ist ein aus der betreffenden Stirnseite 17 des die Schnecke 10 aufnehmenden Teils 16 heraustretender Sechskant 38 vorgesehen. An diesem kann bei Versagen des Motors 22 mittels einer aufsteckbaren Handkurbel ein manueller "Notbetrieb" erfolgen, um den Schwenktrieb in eine gewünschte Position zu verfahren.

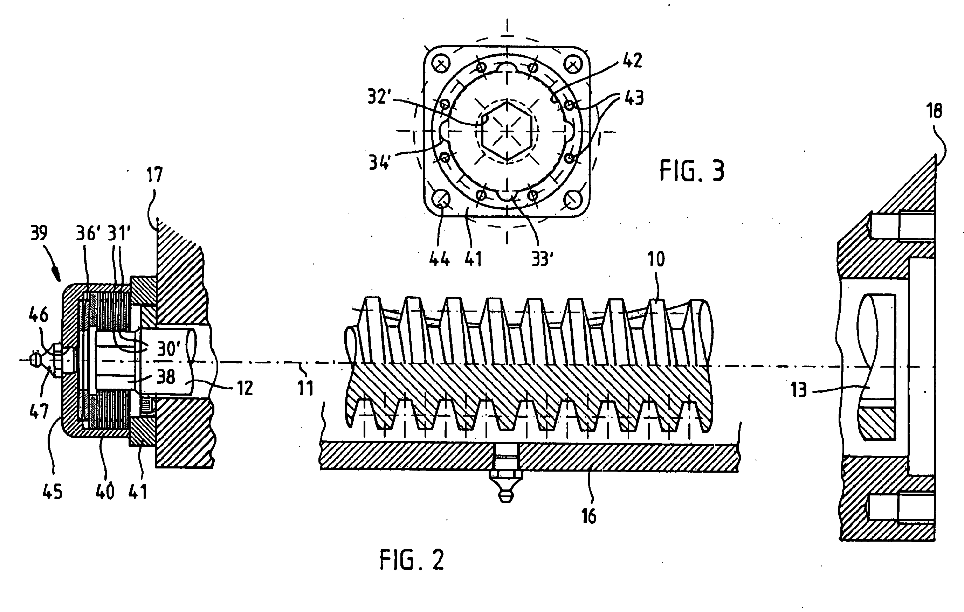

In den Fig. 2 und 3 ist eine abgewandelte Ausführungsform der Erfindung wiedergegeben. Diese unterscheidet sich von der ersten Ausführungsform vor allem dadurch, dass hier eine Bremseinrichtung 39 nicht zwischen dem angetriebenen Schneckenwellenende 13 und dem Antriebsmotor 22 eingefügt ist, sondern auf den an dem gegenüberliegenden Wellenende 12 vorgesehenen Sechskant 38 zum wahlweisen Aufstecken einer (nicht dargestellten) Handkurbel einwirkt. Dies ist deshalb möglich, weil diese Kurbel nur in dem sehr seltenen Ausnahmefall eines Defekts an dem Antriebsmotor 22 benötigt wird und ansonsten stets abgezogen ist.

Der Aufbau dieser Bremse 39 korrespondiert hinsichtlich der Bremsscheiben 30',31' mit sechseckigen Ausnehmungen 32' für den Sechskant 38 einerseits und mit radialen Erweiterungen 33' andererseits, ferner hinsichtlich der Ringscheiben 35' und der Tellerfedern 36' mit der Bremsenanordnung 28 aus Fig. 1, wobei die Reihenfolge dieser Elemente bezüglich einer mittigen, quer verlaufenden Ebene spiegelbildlich zu der Bremse 28 ist.

Im Unterschied dazu ist anstelle einer äußeren Ringscheibe 35 ein glocken- oder becherförmiges Gehäuse 40 vorgesehen, welches die Tellerfedern 36', eine Ringscheibe 35' sowie das Paket von aneinandergeschichteten Bremsscheiben 30',31' umgreift. Die innere Tiefe des Gehäuses 40 wie auch dessen Innendurchmesser entspricht etwa den äußeren Gesamtabmessungen dieser darin aufgenommenen Teile 30',31',35',36'. An der inneren Mantelseite des Gehäuses 40 sind vier Vertiefungen in Form von achsparallel zu der Schnecke 10 verlaufenden Nuten 34' vorgesehen, in welche die Fortsätze 33' der Bremsscheiben 31' eingreifen können, um letztere gegenüber dem Gehäuse 40 unverdrehbar festzulegen.

Die Teile 30',31',35',36' werden in dem Gehäuse 40 gehalten durch einen entlang von dessen Öffnung angeordneten Flansch 41 mit einer etwa viereckigen, insbesondere quadratischen Grundfläche und einer zentralen Ausnehmung 42, deren lichter Durchmesser kleiner ist als der Außendurchmesser der Bremsscheiben 30', 31', so dass dieselben innerhalb des Gehäuses 40 zurückgehalten werden. Zu diesem Zweck kann der Flansch 41 nach dem Zusammenbau der Bremse 39 bspw. mit dem Gehäuse 40 verschraubt 43, verschweißt und/oder verklebt werden.

In den vier radial nach außen weisenden Ecken des Flanschs 41 ist je eine Durchgangsbohrung 44 vorgesehen, welche von einer in die Stirnseite 17 des die Schnecke 10 aufnehmenden Teils 16 einschraubbar ist, um die Bremseinheit 39 daran zu fixieren.

In der außenliegenden, geschlossenen Stirnseite 45 des Gehäuses 40 ist eine Gewindebohrung 46 zum Einschrauben eines Schmiernippels 47 vorgesehen, so dass der Innenraum der Bremseinheit 39 nach deren Anbau an den Schwenktrieb 1 mit Schmierfett befüllt werden kann. Dies hat den Vorteil einer ruckfreien Bewegung bis herab zu kleinsten Drehzahlen.

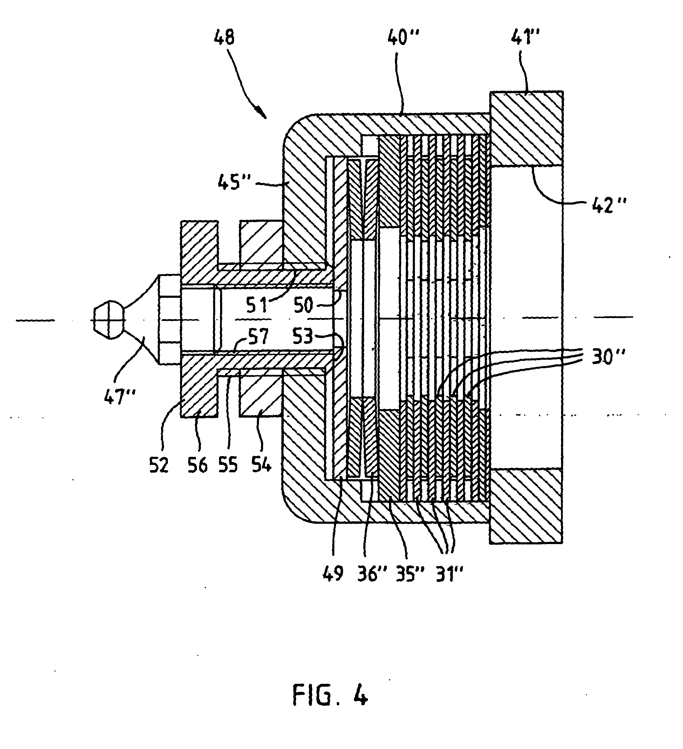

Die Bremseinrichtung 48 nach Fig. 4 entspricht weitgehend der Bremseinrichtung 39 aus den Fig. 2 und 3. Wie jene, so wird auch die Bremseinrichtung 48 mit dem Sechskant 36 zum Aufstecken einer Handkurbel drehfest verbunden, um auf diesem Weg ein Bremsmoment an der Schnecke 10 zu erzeugen. Gehäuse 40" mit Flansch 41" sowie die darin aufgenommenen Teile, nämlich Bremsscheibenpaket 30", 31", Ring 35" und Tellerfederpaket 36" haben denselben Aufbau wie bei der Bremseinrichtung 39.

Im Unterschied dazu stützt sich das Tellerfederpaket 36" jenseits des Bremsscheibenpakets 30", 31" auf einer weiteren Scheibe 49 ab, die bei der vorliegenden Ausführungsform ebenfalls als Ringscheibe ausgebildet ist. Der Durchmesser der zentralen Ausnehmung 50 dieser Ringscheibe 49 ist kleiner als der Durchmesser einer axialen Gewindebohrung 51 in der Stirnseite 45" des Gehäuses 40". Daher kann eine in dies Gewindebohrung 51 eingedrehte Schraube 52 mit ihrem Schaftende 53 gegen die zusätzliche Ringscheibe 49 drücken und demnach je nach ihrer Schraubstellung das Tellerfederpaket 36" mehr oder weniger stark komprimieren. Je nach dem gewählten Kompressionsweg $\ell$ ergibt sich somit eine variable Federkraft $F = c * \ell$, die als Normalkraft auf das Bremsscheibenpaket 30",31" eingeleitet wird und daher die Reibungskraft der Bremse 48 beeinflußt. Da die Bremswirkung etwa proportional zu dem Anstellgrad der Schraube ist, läßt sich ein gewünschtes Bremsmoment sehr feinfühlig einstellen. Eine gefundene Stellung der Einstellschraube 52 kann mittels einer Kontermutter 54 fixiert werden, die entlang des Schraubenschafts 55 bis an die Stirnseite 45" des Gehäuses 40" herangeschraubt und diesem gegenüber verspannt werden kann.

Die Schraube 52 ist von ihrem Kopf 56 bis zu dem Schaftende 53 von einem zumindest bereichsweise mit Gewinde versehenen Kanal 57 durchsetzt, in den ein Schmiernippel 47" einschraubbar ist. Dieser entspricht hinsichtlich seiner Funktion dem Schmiernippel 47 aus Fig. 2.

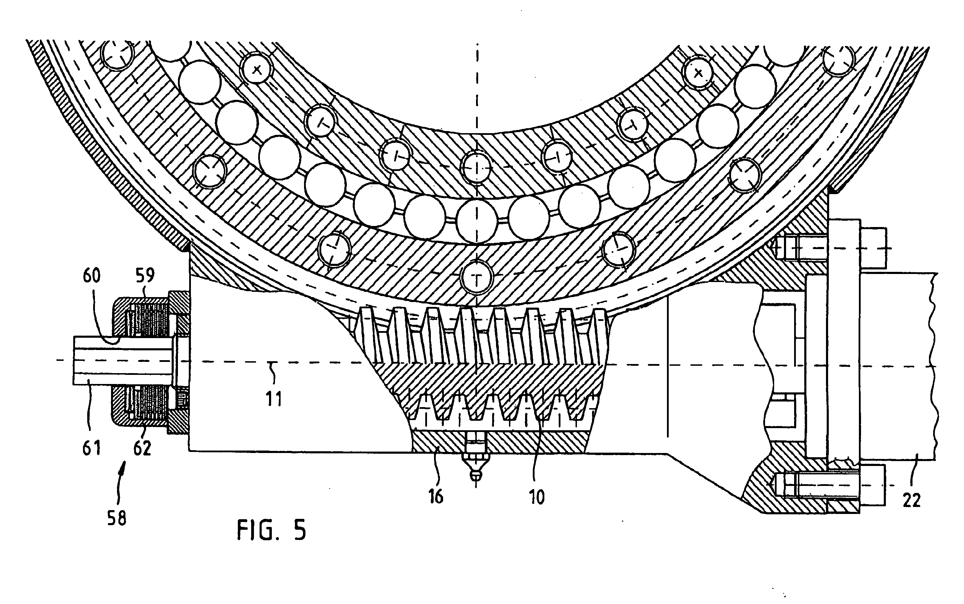

Die Bremseinrichtung 58 aus Fig. 5 hat weitgehend die selbe Struktur wie die Bremseinrichtung 39, mit der Ausnahme, dass eine koaxial in dem Deckel 59 der Bremseinrichtung 58 vorgesehene Ausnehmung 60 einen Durchmesser aufweist, der gleich oder größer ist als ein um den an der Schnecke 10 endseitig angeordneten Außensechskant 61 querschnittlich umbeschriebener Kreis. Dadurch ist es möglich, diesen Sechskant 61 länger zu gestalten als die axiale 11 Erstreckung des Bremsengehäuses 62 und durch die dafür geschaffene Ausnehmung 60 nach außen treten zu lassen. Solchenfalls kann bei Bedarf ohne Demontage der Bremseinrichtung 58 eine Kurbel zur manuellen Betätigung auf den Außensechskant 61 aufgesteckt werden.

## Patentansprüche

1. Vorrichtung in Form eines sog. Schwenktriebs (1) zur verdrehbaren Kopplung eines ersten Maschinen- oder Anlagenteiles, beispielsweise eines Kranes, mit einem zweiten Maschinen- oder Anlagenteil, Chassis, Fundament od. dgl., umfassend:

   a) ein Lagerungsteil (3,16,19) mit einem ersten Anschlußelement (3) zur Festlegung der Vorrichtung an einem Maschinen- oder Anlagenteil, Chassis oder Fundament,
   b) ein(en) an dem Lagerungsteil (16) verdrehbar gelagertes (-en) (2) Schneckenrad oder -ring, mit einem zweiten Anschlußelement (4) zur Festlegung an einem anderen Maschinen- oder Anlagenteil od. dgl., sowie mit einem entlang seines Außenumfangs (8) umlaufend angeordneten Zahnkranz (9),
   c) eine mit dem Zahnkranz kämmende Schnecke (10), die in dem Lagerungsteil (16) oder einem damit integrierten oder drehfest verbundenen Teil aufgenommen und/oder gelagert und von einem Antriebsmotor (22) in Drehung versetzbar ist;
   d) wenigstens eine Bremseinrichtung (28;39; 48), die einerseits an der Schnecke (10) angreifend angeschlossen oder anschließbar und andererseits an dem Lagerungsteil (3) oder einem damit verbundenen oder verbindbaren Teil (16,19) abgestützt ist,
   **dadurch gekennzeichnet, dass**
   e) die beiden Anschlußelemente (3,4) ringförmig ausgebildet sind mit zu der Grundebene des Schwenktriebs (1) rechtwinklig verlaufenden, kranzförmig angeordneten Befestigungsbohrungen (5,6) und durch eine Lagerung (2), insbesondere Wälzlagerung (2), konzentrisch zu einer gemeinsamen Drehachse (7) geführt sind, wobei
   f) die Bremseinrichtung (28;39;48) keine schaltenden Elemente aufweist, so dass die Ausfallwahrscheinlichkeit in kleinsten Grenzen gehalten werden kann, und
   g) permanent und drehrichtungunabhängig eine Bremswirkung erzeugt, wobei
   h) das Bremsmoment unabhängig von der Drehrichtung ist.

2. Vorrichtung nach Anspruch 1, **dadurch gekennzeichnet, dass** die Bremseinrichtung (28;39;48) eine von der Schnecke (10) funktionell getrennte Bremse ist.

3. Vorrichtung nach einem der Ansprüche 1 oder 2, **dadurch gekennzeichnet, dass** das Bremsmoment von der Bremseinrichtung (28;39;48) permanent und drehrichtungsunabhängig auf die Schneckenwelle (10) eingeleitet wird.

**4.** Vorrichtung nach einem der vorhergehenden Ansprüche, **dadurch gekennzeichnet, dass** das Bremsmoment von der Bremseinrichtung (28;39;48) durch einen in tangentialer Richtung wirkenden Formschluß auf die Schneckenwelle (10) übertragen wird.

**5.** Vorrichtung nach einem der vorhergehenden Ansprüche, **dadurch gekennzeichnet, dass** die Bremseinrichtung (28;39;48) nicht zwischen, sondern axial außerhalb der Drehlager der Schneckenwelle (10) angeordnet ist.

**6.** Vorrichtung nach einem der vorhergehenden Ansprüche, **dadurch gekennzeichnet, dass** die Bremseinrichtung (28;39;48) im Bereich einer Stirnseite der Schnecke angeordnet ist, die nicht mit einem Antriebsmotor gekoppelt oder koppelbar ist.

**7.** Vorrichtung nach einem der vorhergehenden Ansprüche, **dadurch gekennzeichnet, dass** die Bremseinrichtung (28;39;48) eine passiv wirkende Bremse ist, d.h. ohne Zufuhr einer Hilfsenergie.

**8.** Vorrichtung nach einem der vorhergehenden Ansprüche, **dadurch gekennzeichnet, dass** die Bremseinrichtung (28;39;48) eine Reibungsbremse mit aneinander reibenden Flächen (30,31) ist.

**9.** Vorrichtung nach Anspruch 9, **dadurch gekennzeichnet, dass** die Reibflächen (30,31) von der Achse (11) der Schnecke (10) etwa lotrecht durchsetzt angeordnet sind.

**10.** Vorrichtung nach einem der vorhergehenden Ansprüche, **dadurch gekennzeichnet, dass** das Bremsmoment der Bremseinrichtung (28;39;48) ein- oder nachstellbar ist.

**11.** Vorrichtung nach einem der vorhergehenden Ansprüche, **dadurch gekennzeichnet, dass** das von der Bremseinrichtung (28;39;48) erzeugte Bremsmoment etwa für den maximalen Belastungsfall der Vorrichtung ausgelegt ist, vermindert um das hemmende Reibungsmoment des Schneckengetriebes (9,10) sowie schließlich dividiert durch das Kraftübersetzungsverhältnis von Schnecke (10) zu Schneckenrad oder -ring (9).

**12.** Vorrichtung nach einem der vorhergehenden Ansprüche, **dadurch gekennzeichnet, dass** das Schneckengetriebe (9,10) nicht selbsthemmend ist.

**13.** Vorrichtung nach einem der vorhergehenden Ansprüche, **dadurch gekennzeichnet, dass** die Elemente der Bremse (28;39;48), insbesondere Reibflächen (30,31) und ggf. Federelemente (36), in einem vorzugsweise glockenförmigen Gehäuse (40) angeordnet sind.

**Claims**

**1.** Device in the form of a so-called swivel drive (1) for the rotatable coupling of a first machine nr system part, for example a crane, with a second machine or system part, chassis, foundation or similar, comprised of:

a) a support piece (3, 16, 19) with a first connection element (3) to affix the device to a machine or system part, chassis or foundation,
b) a worm wheel or ring (2) rotatably supported on the support piece (16) with a second connection element (4) for fixation on another machine or system part or similar, as well as with a toothed ring (9) arranged running along its outer circumference (8),
c) a screw (10) intermeshing with the toothed ring which is held and/or mounted in the support piece (16) or a part which is integrated therewith or connected torque-proof and can be put into motion by a drive motor (22);
d) at least one braking device (28;39;48), which is, on the one hand, connected actively to the worm (10) or can be connected, and, on the other hand, is supported on the support piece (3) or a thereby connected or connectable part (16,19),
**characterized in that**
e) the two connection elements (3,4) are shaped in the form of a ring, running perpendicularly to the base level of the swivel drive, annularly arranged mounting bores (5,6) and led by a bearing (2), in particular anti-friction bearing (2), concentrically to a common rotary axis (7), wherein
f) the braking device (28;39;48) does not have any switching elements so that the probability of failure can be kept within minimum limits, and
g) permanently and independent of the direction of revolution generates a braking force, wherein
j) the braking torque is independent of the direction of revolution.

**2.** Device as defined in claim 1, **characterized in that** the braking device (28;29;48) is a brake which is functionally separate from the worm (10).

**3.** Device as defined in one of the claims 1 or 2, **characterized in that** the braking torque of the braking device (28;39;48) is initiated on the worm shaft (10) permanently and regardless of the direction of revolution.

**4.** Device as defined in one of the preceding claims, **characterized in that** the braking torque is transmitted from the braking device (28;39;48) by a tight fit acting in tangential direction on the worm shaft (10).

**5.** Device as defined in one of the preceding claims, **characterized in that** the braking device (28;39;48) is not located between but axially outside the pivot bearings of the worm shaft (10).

**6.** Device as defined in one of the preceding claims, **characterized in that** the braking device (28;39;48) is located in the area of a front side of the worm which is not coupled to or cannot be coupled to a drive motor.

**7.** Device as defined in one of the preceding claims, **characterized in that** the braking device (28;39;48) is a passively acting brake, in other words, is without the aid of auxiliary power.

**8.** Device as defined in one of the preceding claims, **characterized in that** the braking device (28;39;48) is a friction brake with surfaces (30,31) rubbing against each other.

**9.** Device as defined in one of the preceding claims, **characterized in that** the friction surfaces (30,31) are arranged by the axis (11) of the worm (10) approximately perpendicularly interspersed.

**10.** Device as defined in one of the preceding claims, **characterized in that** the braking torque of the braking device is adjustable or re-adjustable.

**11.** Device as defined in one of the preceding claims, **characterized in that** the braking torque generated by the braking device (28;39;48) is approximately designed for the maximum load of the device, less the inhibiting friction torque of the worm gear (9,10) as well as then divided by the power gear ratio of worm (10) to worm wheel or ring (9).

**12.** Device as defined in one of the preceding claims, **characterized in that** the worm gear (9,10) is not self-inhibiting.

**13.** Device as defined in one of the preceding claims, **characterized in that** the elements of the brake (28;39;48), in particular friction surfaces (30,31) and, if applicable, spring elements (36) are arranged in a preferably bell-shaped housing (40).

**Revendications**

**1.** Dispositif sous forme d'undit entraînement orientable (1) pour l'accouplement rotatif d'un premier élément de machine ou d'installation, par exemple une grue, avec un deuxième élément de machine ou d'installation, châssis, bâti ou similaire, comprenant :

a) un organe de support (3, 16, 19) avec un premier élément de raccordement (3) pour la fixation du dispositif sur un élément de machine ou d'installation, châssis ou bâti,
b) une roue ou bague de vis sans fin (2) montée à rotation sur l'organe de support (16), avec un deuxième élément de raccordement (4) pour la fixation sur un autre élément de machine ou d' installation ou sim., ainsi qu'avec une couronne dentée (9) disposée tout autour de sa périphérie extérieure (8),
c) une vis sans fin (10) s'engrenant avec la couronne dentée qui est logée et/ou montée dans l'organe de support (16) ou dans un élément qui lui est intégré ou raccordé sans possibilité de rotation et qui peut être déplacée par rotation par un moteur d'entraînement (22) ;
d) au moins un dispositif de freinage (28 ; 39 ; 48) qui, d'une part, est raccordé ou peut être raccordé à la vis sans fin (10) en agissant sur cette dernière et, d'autre part, qui est supporté au niveau de l'organe de support (3) ou à un élément (16, 19) qui y est raccordé ou pouvant y être raccordé,
**caractérisé en ce que**
e) les deux éléments de raccordement (3, 4) sont réalisés sous forme annulaire avec des trous de fixation (5, 6) disposés sous forme de couronne, étant perpendiculaires par rapport au plan de base de l'entraînement orientable (1) et qui sont dirigés concentriquement par rapport à un axe de rotation commun (7) par un palier (2), en particulier un palier à roulement (2), où
f) le dispositif de freinage (28 ; 39 ; 48) ne présente aucun élément de contact de sorte que la probabilité de défaillance peut être maintenue dans des limites minimales, et
g) générant un effet de freinage permanent et indépendamment du sens de rotation, où
h) le couple de freinage est indépendant du sens de rotation.

**2.** Dispositif selon la revendication 1, **caractérisé en ce que** le dispositif de freinage (28 ; 39 ; 48) est un frein séparé fonctionnellement de la vis sans fin (10).

**3.** Dispositif selon l'une des revendications 1 ou 2, **caractérisé en ce que** le couple de freinage est provoqué par le dispositif de freinage (28 ; 39 ; 48) en permanence et indépendamment du sens de rotation sur l'arbre de vis sans fin (10).

**4.** Dispositif selon l'une des revendications précédentes, **caractérisé en ce que** le couple de freinage est transmis par le dispositif de freinage (28 ; 39 ; 48) sur l'arbre de vis sans fin (10) par une liaison mécanique agissant en sens tangentiel.

**5.** Dispositif selon l'une des revendications précédentes, **caractérisé en ce que** le dispositif de freinage (28 ; 39 ; 48) n'est pas placé entre, mais axialement à l'extérieur des coussinets de pivotement de l'arbre de vis sans fin (10).

**6.** Dispositif selon l'une des revendications précédentes, **caractérisé en ce que** le dispositif de freinage (28 ; 39 ; 48) est placé dans la zone d'une partie frontale de la vis sans fin qui n'est pas accouplée ou ne peut pas être accouplée à un moteur d'entraînement.

**7.** Dispositif selon l'une des revendications précédentes, **caractérisé en ce que** le dispositif de freinage (28 ; 39 ; 48) est un frein agissant passivement, c'est-à-dire sans apport d'une énergie auxiliaire.

**8.** Dispositif selon l'une des revendications précédentes, **caractérisé en ce que** le dispositif de freinage (28 ; 39 ; 48) est un frein à friction avec des surfaces frottant l'une contre l'autre (30, 31).

**9.** Dispositif selon la revendication 9, **caractérisé en ce que** les surfaces de frottement (30, 31) sont disposées pour être traversées approximativement perpendiculairement par l'axe (11) de la vis sans fin (10).

**10.** Dispositif selon l'une des revendications précédentes, **caractérisé en ce que** le couple de freinage du dispositif de freinage (28 ; 39 ; 48) est ajustable ou réajustable.

**11.** Dispositif selon l'une des revendications précédentes, **caractérisé en ce que** le couple de freinage généré par le dispositif de freinage (28 ; 39 ; 48) est dimensionné approximativement pour le cas de charge maximal du dispositif, diminué du couple de frottement ralentisseur de l'engrenage à vis sans fin (9, 10) et, finalement, divisé par le rapport de transmission de la vis sans fin (10) par rapport à la roue ou la bague de vis sans fin (9) .

**12.** Dispositif selon l'une des revendications précédentes, **caractérisé en ce que** l'engrenage à vis sans fin (9, 10) n'est pas autobloquant.

**13.** Dispositif selon l'une des revendications précédentes, **caractérisé en ce que** les éléments du frein (28 ; 39 ; 48), en particulier les surfaces de frottement (30, 31) et, le cas échéant, les éléments de ressort (36) sont disposés de préférence dans un carter en forme de cloche (40).

FIG. 1

EP 1 422 187 B1

42

32'

43

34'

44    41    33'

FIG. 3

17

39   36' 31'

46

47

30'

38

12

11

10

13

18

45   40   41

16

FIG. 2

FIG. 4

FIG. 5

**EP 1 422 187 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3442138 A